# EUROPÄISCHE PATENTSCHRIFT

(11) **EP 3 094 875 B1**
(45) Veröffentlichungstag und Bekanntmachung des Hinweises auf die Patenterteilung: **08.11.2017**
(21) Anmeldenummer: 15703888.6
(22) Anmeldetag: 13.01.2015
(51) Int. Cl.: F16C 33/74, F16C 33/10, B65G 33/32, F16C 17/02, F04D 3/02, F04D 29/10, F16J 15/3204

(54) **LAGERUNG EINER DREHENDEN WELLE MIT DICHTRING**
BEARING OF A ROTATING SHAFT WITH SEALING
PALIER D'UN ARBRE ROTATIF AVEC ÉTANCHÉITÉ

(30) Priorität: 14.01.2014 DE 102014000197
(43) Veröffentlichungstag der Anmeldung: 23.11.2016
(73) Patentinhaber: Schwing GmbH, 44653 Herne (DE)
(72) Erfinder: KLASSEN, Waldemar, 44627 Herne (DE)
(74) Vertreter: Schneiders, Josef
(86) Internationale Anmeldenummer: PCT/EP2015/050488
(87) Internationale Veröffentlichungsnummer: WO 2015/107043

(56) Entgegenhaltungen:
- JP-A- 2001 349 326
- JP-A- 2008 298 084
- US-A- 4 795 276
- US-A1- 2011 194 873

## Beschreibung

Die Erfindung betrifft ein Lager einer drehenden Welle, insbesondere die Abdichtung eines derartigen Lagers gegen eindringende Verunreinigungen.

In JP 2001 349326 A ist ein gattungsbildendes Lager und in JP 2008 298084 A, US 2011/194873 A1 und US 4 795 276 A sind gattungsähnliche Lager für Drucker und Kopierer offenbart.

Lager werden auch bei Fördereinrichtungen für Dickstoffe eingesetzt, bei denen die Lager einer sich drehenden Förderschnecke gegen das Eindringen von Dickstoff abzudichten sind, aber auch bei Betonpumpen, bei denen beispielsweise ein Betonpumpenventil (beispielsweise ein S-Rohr oder Rockschieber) in einem Betontrog mittels einer Welle hin- und hergeschwenkt wird.

An die Lager derartiger Geräte werden hohe Anforderungen gestellt, denn obwohl sie von dem zu fördernden Medium (z.B. Klärschlämme, Beton, Sand-Wasser-Gemische usw.) umgeben sind, müssen sie robust und lange haltbar sein. Zudem besteht häufig die Anforderung an derartige Lager, dass kein Schmiermittel (z.B. Öl oder Schmierfett) aus dem Lager in das zu fördernde Medium austritt.

Aus dem Stand der Technik (DE 4116247 C1) ist es bekannt, das Lager eines Betonpumpenventils einer Betonpumpe gegen das Eindringen von Beton, aber auch gegen das Austreten von Schmiermittel mit einem bzw. mehreren Wellendichtringen und mit Schmiermittelkanälen mit Überdruckventilen mit unterschiedlichen Grenzdrücken abzudichten.

Eine derartige Abdichtung ist relativ komplex. Der in der genannten Schrift vorgeschlagene äußere Wellendichtring zur Abdichtung des Lagers ist, insbesondere bei einem von der Lagerinnenseite anstehenden Fettdruck, nicht dicht gegen von außen eindringenden Dickstoff, der zu einer Verunreinigung des Schmiermittels im Lager führen kann.

Insbesondere bei ähnlichen Anwendungen, beispielweise bei der Lagerung der Welle einer Förderschnecke, bei denen sich die Lagerung innerhalb eines unter hohem Druck geförderten Mediums befindet, ist es wichtig, die Lager ausreichend abzudichten. Einerseits um das Eintreten des zu fördernden Dickstoff in das Lager zu vermeiden, aber auch um zu vermeiden, dass das zur Schmierung des Lagers notwendige Schmiermittel aus dem Lager in den Dickstoff übertritt, da dies je nach gepumptem Dickstoff unerwünscht sein kann. Zudem werden hohe Anforderungen an die Lebensdauer der Lager einer Förderschnecke gestellt, da der Austausch der Lager, und unter Umständen auch der gelagerten Welle, hohen Zeitaufwand und Kosten verursachen. Es ist zudem wünschenswert, noch eine gute Abdichtung des Lagers zu erreichen, wenn sich nach einer gewissen Nutzungszeit Verschleißerscheinungen zeigen, so dass sich bei einsetzendem Verschleiß der Austausch von Bauteilen hinauszögern lässt.

Aufgabe der vorliegenden Erfindung ist es ein Lager bereitzustellen, das für die oben beschriebenen Probleme Verbesserungen schafft.

Diese Aufgabe wird durch ein Lager gemäß Anspruch 1 sowie eine Fördereinrichtung gemäß Anspruch 11 gelöst. Weitere Ausgestaltungen der Erfindung sind in den Unteransprüchen angegeben.

Ein erfindungsgemäßes Lager zur Lagerung einer Welle umfasst ein Lagergehäuse mit einer die zu lagernde Welle aufnehmenden Öffnung, einem am Rand der Öffnung angeordneten, nach innen gerichteten, umlaufenden Haltebund, eine in dem Lagergehäuse angeordnete Lagerbuchse und einen in dem Lagergehäuse zwischen der Lagerbuchse und dem Haltebund angeordneten Dichtring, der dichtend an der zu lagernden Welle anliegt, wobei der Dichtring eine von der Lagerbuchse weg weisende, axial ausgerichtete und zu ihrem freien Ende hin spitz zulaufende Dichtlippe aufweist, die eine Anlagefläche des Dichtrings an der zu lagernden Welle bildet.

Der Erfindung liegt die Erkenntnis zugrunde, dass die bisher für derartige Anwendungsfälle verwendeten Wellenlager, die zwar mit einer auf dem Lager aufliegenden Dichtlippe ausgestattet sind, die Welle nicht ausreichend gegen in das Lager eindringende Stoffe abdichten. Dies liegt daran, dass sich beispielsweise die unflexiblen, dicken Dichtlippen bekannter Dichtringe wegen des durch das Schmiermittel erzeugten Innendrucks im Lager von der Welle abheben und damit das Lager nicht mehr dicht verschließen.

Bei einer spitz zulaufenden Dichtlippe, die die Anlagefläche des Dichtringes auf der zu lagernden Welle bildet, ist immer eine gute Abdichtung des Lagers gewährleistet, auch wenn Verschleiß an der Welle oder dem Lagergehäuse eintreten sollte.

Die Dichtlippe des Dichtringes, die auf der zu lagernden Welle aufliegt, liegt vorteilhafterweise unter einer Vorspannung auf der Welle, d.h. der innere Durchmesser des Dichtringes auf Höhe einer Spitze der spitz zulaufenden inneren Dichtlippe ist im nicht eingebauten Zustand des Dichtringes geringer als der Durchmesser der Welle, die beim Einbau in den Dichtring eingeführt wird und die Dichtlippe dabei aufspreizt. Die Spitze der Dichtlippe passt sich damit dem Durchmesser der Welle an und liegt mit einem gewissen Druck auf der Welle.

Gemäß einer vorteilhaften Ausgestaltung der Erfindung überragt der Haltebund den Dichtring radial nach innen. Durch diese konstruktive Maßnahme kann das Fördermedium, beispielsweise während des Pumpvorganges einer Dickstoffpumpe, Druck auf die spitz zulaufende Dichtlippe ausüben, wodurch die Dichtlippe stärker auf die Welle gedrückt wird, was eine noch bessere Abdichtung, gewährleistet, auch wenn das Lager von einem Fördermedium unter Druck umgeben ist.

Im Stand der Technik war es bisher so, dass ein höherer Druck des das Lager umgebenden Mediums dazu geführt hat, dass das Medium in das Lager eindringt. Bei dem Dichtring entsprechend der Erfindung ergibt sich der Vorteil, dass ein höherer Druck des Mediums automatisch zu einer weiteren Verbesserung der Abdichtung des Lagers beiträgt.

Der Dichtring des Lagers gemäß der Erfindung besteht vorteilhafterweise aus einem selbstschmierenden Kunststoffmaterial. Damit ist es nicht erforderlich das Lager, insbesondere den Bereich zwischen der spitz zulaufenden Spitze der Dichtlippe und der Welle mit einem Schmiermittel zu versorgen.

Der Dichtring gemäß der Erfindung weist vorteilhafterweise auf einer Innenseite, an der der Lagerbüchse zugewandten Seite, eine Nut auf. Die Nut macht zumindest der der Lagerinnenseite zugewandten Seite des Dichtringes für ein Schmiermittel zugänglich.

Eine weiter verbesserte Ausführungsform der Erfindung zeichnet sich dadurch aus, dass zwischen der Lagerbuchse und dem Dichtring zusätzlich ein Wellendichtring angeordnet ist. Dieser Wellendichtring, der direkt an die der Lagerinnenseite zugewandten Seite des Dichtringes anschließt, sorgt für eine zusätzliche Abdichtung des Lagers gegen austretendes Schmiermittel.

Erfindungsgemäß weist das Lager einen Schmiermitteleinlass zur Versorgung mit einem Schmiermittel von einer Schmiervorrichtung unter Druck und einen Schmiermittelauslass mit einem Überdruckventil auf. Das Überdruckventil öffnet sich bei einem Grenzdruck und der Grenzdruck des Überdruckventils ist bevorzugt grösser als der Förderdruck eines das Lager umgebenden, z.B. gepumpten Mediums. Mit einem derartigen Schmiersystem lässt sich innerhalb des Lagers ein Schmiermitteldruck einstellen, der vorteilhafterweise höher ist als der Druck des geförderten Mediums außerhalb des Lagers. Hierdurch wird zusätzlich verhindert, dass aufgrund des erhöhten Schmiermitteldruckes im Lager das Fördermedium in das Lager eindringt. Zudem wird mittels des Wellendichtringes sichergestellt, dass kein Schmiermittel aus dem Lager austreten kann.

Das Lager gemäß der Erfindung ist insbesondere für Anwendungsfälle geeignet in denen die Welle gleitend in dem Lagergehäuse gelagert ist, wie z.B. bei Gleitlagern.

Die Lagerbuchse des Lagers gemäß der Erfindung ist vorteilhafterweise mit Schmiermittelkanälen, einer äußeren Schmiermittelnut und einer inneren Schmiermittelnut ausgestattet. An der inneren Oberfläche der Lagerbuchse sind zudem vorteilhafterweise Schmiermittelwendel angeordnet. Diese Nuten und Schmiermittelwendel ermöglichen eine gleichmäßige Verteilung des Schmiermittels zwischen der Innenseite der Lagerbuchse und der gelagerten Welle.

Das erfindungsgemäße Lager ist insbesondere zur Lagerung einer drehenden Welle einer Fördereinrichtung für Dickstoffe geeignet, die mit einer Welle mit darauf angeordneten Schneckenwendeln, also einer Förderschnecke, ausgestattet ist.

Ferner betrifft die Erfindung eine Fördereinrichtung für Dickstoffe, die ein erfindungsgemäßes Lager aufweist. Bevorzugt weist die Einrichtung eine Welle auf, auf der Schneckenwendeln angeordnet sind. Bei der Fördereinrichtung ist das erfindungsgemäße Lager bevorzugt an einem austrittseitigen Ende der Förderschnecke angeordnet.

Anhand der Zeichnungen werden im Folgenden Ausführungsbeispiele der Erfindung erläutert.

Es zeigen:
- Figur 1:: schematische Ansicht einer Dickstoffpumpe mit einer Förderschnecke mit einem Lager gemäß der Erfindung
- Figur 2: Ansicht des austrittseitigen Endes einer Förderschnecke mit einem Lager gemäß der Erfindung
- Figur 3:: Querschnitt durch ein Lager gemäß der Erfindung
- Figur 4: Querschnitt durch einen Dichtungsring eines erfindungsgemäßen Lagers
- Figur 5: Detailansicht des Querschnittes durch einen Dichtungsring eines Lagers

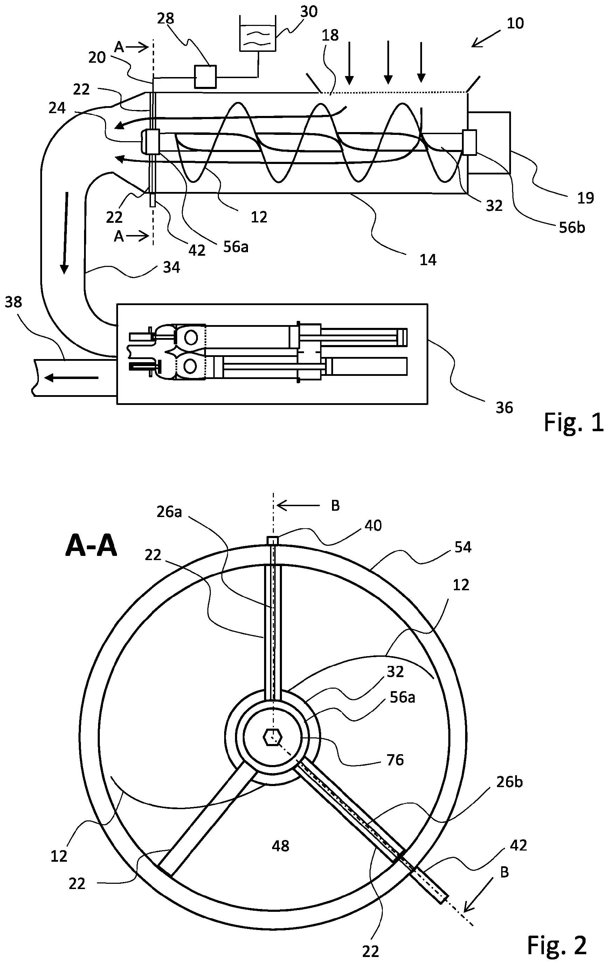

Figur 1 zeigt eine Dickstoffpumpe mit einer Förderschnecke 10 und einer schematisch dargestellten Zwei-Zylinder-Kolbenpumpe 36, bei der der zu fördernde Dickstoff ("das Fördermedium") der Förderschnecke 10 über eine Einlassöffnung 18 zugeführt wird. Die Flussrichtung des Dickstoffes ist in dieser Figur mit Pfeilen dargestellt. Die Förderschnecke 10 fördert und komprimiert den Dickstoff mittels eines Förderschneckenantriebes 19, der eine Welle 32 antreibt, auf der ein oder mehrere Schneckenwendel 12 angeordnet sind. Vom Ausgang der Förderschnecke 10, in der sich ein Lager 56a zur Lagerung der Welle 32 befindet, wird der Dickstoff über ein Auslaufstück 34 der Zwei-Zylinder-Kolbenpumpe 36 zugeführt, die den Dickstoff ansaugt und mit hohem Druck in ein Förderrohr 38 pumpt. Ein weiteres Lager ist in Figur 1 mit 56b.

Das Lager 56a ist mittels Verstrebungen 22 in der Mitte der austrittseitigen Öffnung der Förderschnecke 10 befestigt. Im ausgangsseitigen Bereich der Förderschnecke 10 fließt der Dickstoff unter dem Druck der Förderschnecke 10 um das Lager 56a herum, was besondere Ansprüche an die Dichtheit dieses Lagers gegen eindringenden Dickstoff stellt. Zudem sollte das Lager 56a möglichst dicht gegen austretendes Schmiermittel sein, wenn der gepumpte Dickstoff nicht durch das Schmiermittel des Lagers 56a verunreinigt werden darf.

Durch eine der Verstrebungen 22 verläuft ein Schmiermittelzuführkanal 26a, der von einer Schmiermittelvorrichtung 28, z.B. einer Zentralschmieranlage, mit Schmiermittel versorgt wird. Die Schmiermittelvorrichtung 28 bezieht das Schmiermittel aus einem Schmiermittelbehälter 30. Unterhalb des Lagers 56a befindet sich, am Ende eines Schmiermittelabführkanals 26b, ein Überdruckventil 42, dass den Druck des Schmiermittels innerhalb des Lagers 56a begrenzt. Der Grenzdruck des Überdruckventils 42 liegt vorteilhafterweise oberhalb des Drucks des von der Förderschnecke 10 gepumpten Fördermediums im ausgangsseitigen Bereich der Förderschnecke 10. Aufgrund des Druckunterschiedes ist sichergestellt, dass der Dickstoff nicht in das Lager 56a eindringt.

Figur 2 zeigt schematisch einen Querschnitt durch das ausgangsseitige Ende der Förderschnecke 10 entlang der Schnittlinien A-A aus Fig. 1 mit dem Lager 56a welches die Welle 32 mit den Schneckenwendeln 12 lagert.

Das Lager 56a, welches als Gleitlager ausgeführt ist, das, wie schon in Verbindung mit Figur 1 dargelegt, zwischen Verstrebungen 22 befestigt ist, ist auf der den Förderschneckenwendeln 12 abgewandten Seite mit einem Lagerdeckel 24 verschlossen. Von der anderen Seite führt die Welle 32 bzw. ein etwas dünnerer Absatz der Welle, der Wellenzapfen 76, der über eine Schweißnaht 62 mit der Welle 32 verbunden ist, in das Lager 56a. Im Folgenden wird der Einfachheit halber immer auf den Wellenzapfen 76 Bezug genommen. Im Prinzip, wenn der Durchmesser des Lagers 56a größer ausgelegt wäre, könnte die Welle 32 auch direkt im Lager 56a gelagert sein. Am oberen Ende des Schmiermittelzuführkanals 26 befindet sich ein Schmiermittelanschluss 40, der mit der Schmiermittelvorrichtung 28 in geeigneter Weise verbunden ist. Die drei Verstrebungen 22 sind an ihren äußeren Enden mit der Endlagerplatte 54 verschweißt, die ihrerseits beispielsweise mit dem Förderschneckengehäuse 14 in geeigneter Weise verbunden, also z.B. verschraubt oder verschweißt sind.

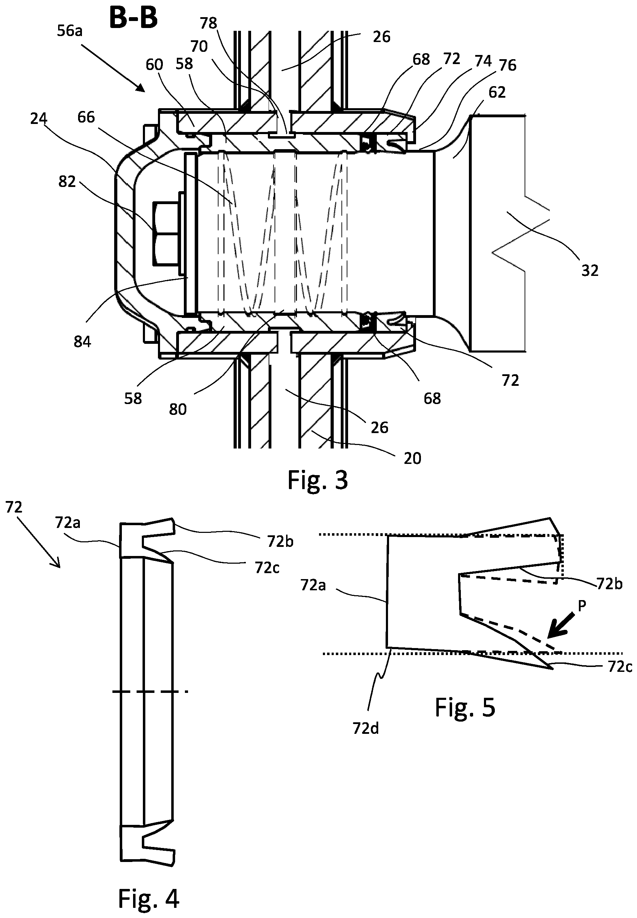

Figur 3 zeigt einen Querschnitt durch das Lager 56a aus Figur 2 entlang der Schnittlinien B-B. In dem Lagergehäuse 60 ist eine Lagerbuchse 58 angeordnet, die eine äußere Schmiermittelnut 78 und eine innere Schmiermittelnut 80 aufweist. Von der inneren Schmiermittelnut 80 zweigt eine Schmiermittelspiralnut 66 ab, die das, über den Schmiermittelkanal 26 und die Bohrung 70 eingedrückte Schmiermittel, z.B. Schmierfett, zwischen dem Wellenzapfen 76 und der Lagerbuchse 58, gleichmäßig verteilt. Rechts von der Lagerbuchse 58 ist ein Wellendichtring (WDR-Ring) 68 bekannter Bauart angeordnet, der mit seinem inneren Umfang auf den Wellenzapfen 76 aufgesteckt ist und mit seinem äußeren Umfang im Gehäuse 60 angebracht ist.

Der Wellendichtring 68 hat insbesondere die Aufgabe, das Austreten von Schmierfett aus dem Lager zu unterbinden. Rechts vom Wellendichtring 68 befindet sich ein Dichtring 72 mit einer Rückseite 72a, und einer äußeren Dichtlippe 72b. Der Dichtring 72 weist zudem eine von der Lagerbuchse 58 weg weisende, axial ausgerichtete und zu ihrem freien Ende hin spitz zulaufende Dichtlippe 72c auf, die die Anlagefläche des Dichtringes 72 an der zu lagernden Welle 76 bildet. Insbesondere die Dichtlippe 72c steht direkt mit dem geförderten Dickstoff in Kontakt. Der Dichtring 72 ist in das Lagergehäuse 60 eingedrückt bzw. - gepresst und die äußere Dichtlippe 72b stützt sich an dem Haltebund 74 des Lagergehäuses 60 ab. Die innere, nach außen hin spitz zulaufende Dichtlippe 72c liegt auf dem sich drehenden Wellenzapfen 76 auf und sorgt somit dafür, dass der außerhalb des Lagers befindliche Dickstoff nicht in das Lager 56a eindringen kann.

Figur 4 zeigt einen Querschnitt durch den Dichtring 72 in nicht eingebautem, entspannten, Zustand, wobei zu erkennen ist dass die Dichtlippe 72b etwas nach oben und die innere Dichtlippe 72c etwas nach unten abgespreizt ist.

In Figur 5 ist der Unterschied zwischen dem Dichtring 72 in nicht eingebautem Zustand (durchgehende Linie) und im eingebauten Zustand (gestrichelte Linie) dargestellt. Die waagerecht verlaufende gepunktete Linie oberhalb der Dichtlippen 72b stellt hier das Gehäuse 60 dar, in das der Dichtring 72 eingelegt oder eingepresst ist und die waagerechte verlaufende gepunktete Linie unterhalb der Dichtlippe stellt den Wellenzapfen 76 dar, der durch den Dichtring 72 hindurchführt. Weil die untere, zu ihrem freien Ende hin spitz zulaufende Dichtlippe 72c vorgespannt ist, liegt sie dicht auf dem Wellenzapfen 76 auf. Auch wenn der Wellenzapfen 76 innerhalb der Lagerbuchse 58 etwas Spiel haben sollte, womit aufgrund von Toleranzen und Verschleiß zu rechnen ist, liegt die Dichtlippe 72c durch die Vorspannung immer dicht auf dem Wellenzapfen 76 auf. Dies ist auch dann der Fall, wenn die Dichtlippe 72c im Verlauf der Zeit etwas verschleißen sollte, weil sie sich praktisch selbst im laufenden Betrieb schärft. D.h. durch den Verschleiß der Dichtlippe 72c wird diese zwar im Laufe der Zeit verkürzt, sie liegt dann aber immer noch dicht auf der Welle 76 auf.

Ein weiterer besonderer Vorteil des Dichtringes 72 gemäß der Erfindung ergibt sich daraus, dass der Druck P des geförderten Dickstoffes im Bereich des Lagers dazu dient, die Dichtlippe, d.h. insbesondere das spitz zulaufende freie Ende der Dichtlippe 72c, weiter auf die Welle 76 zu drücken und somit bei einem höheren Druck des Fördermediums, der bei bekannten Abdichtungsvarianten (z.B. mit einem einfach O-Ring) dazu führt, dass die Gefahr des Eintretens des Fördermediums sich eher vergrößert, jetzt die Gefahr des Eintretens des Fördermediums aufgrund der besseren Abdichtung sogar verringert ist.

Eine wichtige Eigenschaft des Dichtringes 72 ist seine Elastizität, insbesondere im Bereich der Dichtlippen 72b,c um immer eine gute Abdichtung zu erzielen. Für diesen Zweck besteht der Dichtring 72 aus einem verschleißfesten, aber auch dauerelastischem Kunststoffmaterial. Da insbesondere die Dichtlippe 72c immer auf dem Wellenzapfen 76 aufliegt, aber durch den davor angeordneten Wellendichtring 68 von der Schmiermittelzufuhr im Wesentlichen abgetrennt ist, besteht der Dichtring 72 vorteilhafterweise aus einem selbstschmierenden Kunststoff um den Verschleiß gering zu halten. Um dennoch eine gewisse Fettschmierung, zumindest für eine gewisse Zeit nach dem Einbau, zu gewährleisten, ist der Dichtring 72 an seiner Innenseite an der, der inneren Dichtlippe 72c abgewandten Seite, mit einer Schräge bzw. Nut 72d versehen, in die beim Einbau des Wellenzapfens 76 etwas Schmierfett eingebracht werden kann. Dieser Bereich wird unter Umständen auch im laufenden Betrieb durch eine leichte Undichtigkeit des Wellendichtringes 68 mit Schmierfett versorgt.

Die zu ihrem freien Ende hin spitz zulaufende Dichtlippe 72c muss nicht unbedingt absolut spitz zulaufen, sondern sie muss so ausgebildet sein, dass sie im auf dem Wellenzapfen aufliegenden Bereich, also an der Spitze, elastisch aufliegt und sich durch eine dickere "Lippenwurzel" ein ausreichender Anpressdruck auf die Welle ergibt. Z.B. könnte bei einem Durchmesser des Dichtringes 72 von ca. 5 cm die äußere Spitze der Dichtlippe 72c auch noch 1-2 mm dick sein, womit sie dennoch die Anforderungen gemäß der Erfindung erfüllt. Ein wichtiger Aspekt aber ist, dass die Dicke der Dichtlippe 72c im Bereich der Lippenwurzel grösser ist als an der Spitze der Dichtlippe 72c um den notwendigen Anpressdruck von der Lippenwurzel und die notwendige Elastizität der Spitze der Dichtlippe 72c zu erzielen.

In dem hier gezeigten Ausführungsbeispiel wird die Verwendung des Dichtringes 72 in Verbindung mit einem Wellendichtring 68 und einer Schmiermittelversorgung unter Druck gezeigt und beschrieben. Der Dichtring 72 kann aber auch ohne den Wellendichtring 68 und die erfindungsgemäße Schmiermittelversorgung verwendet werden, wenn beispielsweise das Austreten von Schmierfett aus dem Lager 56a - in begrenztem Ausmaß - akzeptiert werden kann. So könnte z.B. auch in dem hier gezeigten Ausführungsbeispiel der Förderschnecke, auf der antriebsseitigen Seite der Welle ein Dichtring 72 eingesetzt werden, denn das antriebsseitige Lager 56b ist in der Regel geringeren Belastungen ausgesetzt, weil das Fördermedium an dieser Stelle noch keinen Druck aufgebaut hat, wie diese am austrittseitigen Ende der Förderschnecke der Fall ist.

Das erfindungsgemäße Lager könnte beispielsweise auch bei der Lagerung eines Schaltventils von Betonpumpen verwendet werden, bei der die Welle, mit der das Schaltventil betätigt wird, von hydraulischen Zylindern hin- und hergeschwenkt wird.

In dem oben genannten Beispiel wird gezeigt, wie eine Seite eines Lagers mit dem Dichtring 72 abgedichtet ist und die andere Seite des Lagers ist mit einem Lagerdeckel 24 verschlossen. Die Erfindung könnte aber entsprechend für die beidseitige Abdichtung eines Lagers im Sinne dieser Erfindung verwendet werden.

### Bezugszeichenliste

- 10: Förderschnecke
- 12: Förderschneckenwendel
- 14: Förderschneckengehäuse
- 16: Förderschneckenantrieb
- 18: Förderschneckenzuführung
- 20: Schmiermittelzuführleitung
- 22: Verstrebung Schneckenlager
- 24: Lagerdeckel
- 26a: Schmiermittelzuführkanal
- 26b: Schmiermittelabführkanal
- 28: Zentralschmieranlage/ Schmiervorrichtung
- 30: Schmiermittelbehälter
- 32: Förderschneckenwelle
- 34: Auslassstück Förderschnecke
- 36: Dickstoffpumpe
- 38: Förderrohr
- 40: Schmiermittelanschluss
- 42: Überdruckventil Schmiermittel
- 48: Sicherungsschraube Lager
- 54: Endlagerplatte
- 56a,b: Lager
- 58: Lagerbuchse
- 60: Lagergehäuse
- 62: Schweißnaht
- 66: Schmiermittelspiralnut
- 68: Wellendichtring (WDR-Ring)
- 70: Schmiermittelbohrung Gehäuse
- 72: Dichtring
- 72a: Rückwand Dichtring
- 72b: äußere Lippe Dichtring/ äußere Dichtlippe
- 72c: innere Lippe Dichtring/ innere Dichtlippe
- 72d: Nut Dichtring
- 74: Haltebund
- 76: Wellenzapfen
- 78: Äußere Schmiermittelnut Lagerbuchse
- 80: Innere Schmiermittelnut Lagerbuchse
- 82: Schmiermittelkanal Lagerbuchse

## Patentansprüche

1. Lager (56a,56b) zur Lagerung einer drehenden Welle (76), umfassend:
- ein Lagergehäuse (60) mit einer die zu lagernde Welle (76) aufnehmenden Öffnung,
- einem am Rand der Öffnung angeordneten, nach innen gerichteten, umlaufenden Haltebund (74),
- eine in dem Lagergehäuse (60) angeordnete Lagerbuchse (58) und
- einen in dem Lagergehäuse (60) zwischen der Lagerbuchse (58) und dem Haltebund (74) angeordneten Dichtring (72), der dichtend an der zu lagernden Welle (76) anliegt, wobei der Dichtring (72) eine von der Lagerbuchse (58) weg weisende, axial ausgerichtete und zu ihrem freien Ende hin spitz zulaufende Dichtlippe (72c) aufweist, die eine Anlagefläche des Dichtrings (72) an der zu lagernden Welle (76) bildet,
**gekennzeichnet durch**,
einen Schmiermitteleinlass (20,40,70) zur Versorgung des Lagers (56) mit einem Schmiermittel von einer Schmiervorrichtung (28) unter Druck und ein Schmiermittelauslass (26) mit einem Überdruckventil (42).

2. Lager (56a,56b) nach Anspruch 1, **dadurch gekennzeichnet, dass** die Dichtlippe (72c) der Dichtung (72) unter einer Vorspannung auf der zu lagernden Welle (76) aufliegt.

3. Lager (56a,56b) nach Anspruch 1 oder 2, **dadurch gekennzeichnet, dass** der Dichtring (72) den Haltebund(74) radial nach innen überragt.

4. Lager (56a,56b) nach einem der vorhergehenden Ansprüche, **dadurch gekennzeichnet, dass** der Dichtring (72) aus einem selbstschmierenden Kunststoffmaterial besteht.

5. Lager (56a,56b) nach einem der vorhergehenden Ansprüche, **dadurch gekennzeichnet, dass** der Dichtring (72) auf seiner Innenseite, an der Seite gegenüber den Dichtlippen (72b,72c), eine Nut (72d) aufweist.

6. Lager (56a,56b) nach einem der vorhergehenden Ansprüche, **dadurch gekennzeichnet, dass** zwischen dem Dichtring (72) und der Lagerbuchse (59) zusätzlich ein Wellendichtring (68) angeordnet ist.

7. Lager (56a,56b) nach Anspruch 1, **dadurch gekennzeichnet, dass** das Überdruckventil (42) bei einem Grenzdruck öffnet, wobei der Grenzdruck des Überdruckventils (42) größer ist, als der Förderdruck eines das Lager umgebenden Mediums.

8. Lager (56a,56b) nach Anspruch 1 oder 7, **dadurch gekennzeichnet, dass** in der Lagerbuchse (58) Schmiermittelkanäle (82) mit einer äußeren Schmiermittelnut (78) und einer inneren Schmiermittelnut (80) angeordnet sind.

9. Lager (56a,56b) nach Anspruch 8, **gekennzeichnet durch** an der inneren Oberfläche der Lagerbuchse (58) angeordnete Schmiermittelwendel (66).

10. Fördereinrichtung für Dickstoffe (10) **gekennzeichnet durch** ein Lager (56a; 56b) zur Lagerung der Welle (76) nach einem der vorhergehenden Ansprüche.

11. Fördereinrichtung für Dickstoffe (10) gemäß Anspruch 10, **dadurch gekennzeichnet dass** auf der Welle Schneckenwendeln (12) angeordnet sind und bei der das Lager (56a, 56b) an einem ausgangseitigen Ende der Welle (76) angeordnet ist.

## Claims

1. Bearing (56a, 56b) for mounting a rotating shaft (76), comprising:
- a bearing housing (60) having an opening which receives the shaft (76) to be mounted,
- an inwardly directed, circumferential holding collar (74) which is arranged at the edge of the opening,
- a bearing bush (58) which is arranged in the bearing housing (60), and
- a sealing ring (72) which is arranged in the bearing housing (60) between the bearing bush (58) and the holding collar (74) and bears sealingly against the shaft (76) to be mounted, the sealing ring (72) having a sealing lip (72c) which points away from the bearing bush (58), is oriented axially, tapers acutely towards its free end, and forms a bearing face of the sealing ring (72) against the shaft (76) to be mounted,
**characterized by** a lubricant inlet (20, 40, 70) for supplying the bearing (56) with a lubricant from a lubricating device (28) under pressure, and a lubricant outlet (26) with a pressure relief valve (42).

2. Bearing (56a, 56b) according to Claim 1, **characterized in that** the sealing lip (72c) of the sealing ring (72) lies under a prestress on the shaft (76) to be mounted.

3. Bearing (56a, 56b) according to Claim 1 or 2, **characterized in that** the sealing ring (72) projects beyond the holding collar (74) radially to the inside.

4. Bearing (56a, 56b) according to one of the preceding claims, **characterized in that** the sealing ring (72) consists of a self-lubricating plastic material.

5. Bearing (56a, 56b) according to one of the preceding claims, **characterized in that** the sealing ring (72) has a groove (72d) on its inner side, on the side opposite the sealing lips (72b, 72c).

6. Bearing (56a, 56b) according to one of the preceding claims, **characterized in that** a shaft sealing ring (68) is additionally arranged between the sealing ring (72) and the bearing bush (58).

7. Bearing (56a, 56b) according to Claim 1, **characterized in that** the pressure relief valve (42) opens at a limit pressure, the limit pressure of the pressure relief valve (42) being higher than the delivery pressure of a medium which surrounds the bearing.

8. Bearing (56a, 56b) according to Claim 1 or 7, **characterized in that** lubricant ducts (82) with an outer lubricant groove (78) and an inner lubricant groove (80) are arranged in the bearing bush (58).

9. Bearing (56a, 56b) according to Claim 8, **characterized by** lubricant spirals (66) which are arranged on the inner surface of the bearing bush (58).

10. Delivery device for thick matter (10), **characterized by** a bearing (56a; 56b) for mounting the shaft (76) according to one of the preceding claims.

11. Delivery device for thick matter (10) according to Claim 10, **characterized in that** worm screws (12) are arranged on the shaft, and in which delivery device the bearing (56a, 56b) is arranged at an output-side end of the shaft (76).

## Revendications

1. Palier (56a, 56b) pour le support d'un arbre rotatif (76), comprenant :
- un logement de palier (60) avec une ouverture recevant l'arbre (76) à supporter,
- un épaulement de retenue périphérique (74) disposé au niveau du bord de l'ouverture, orienté vers l'intérieur,
- une douille-palier (58) disposée dans le logement de palier (60) et
- une bague d'étanchéité (72) disposée dans le logement de palier (60) entre la douille-palier (58) et l'épaulement de retenue (74), qui s'applique hermétiquement contre l'arbre (76) à supporter, la bague d'étanchéité (72) présentant une lèvre d'étanchéité (72c) se terminant en pointe vers son extrémité libre, tournée à l'écart de la douille-palier (58), et orientée axialement, qui forme une surface d'appui de la bague d'étanchéité (72) contre l'arbre (76) à supporter,
**caractérisé par**
une entrée de lubrifiant (20, 40, 70) pour l'alimentation du palier (56) en lubrifiant à partir d'un dispositif de lubrification (28) sous pression et une sortie de lubrifiant (26) comprenant une soupape de surpression (42).

2. Palier (56a, 56b) selon la revendication 1, **caractérisé en ce que** la lèvre d'étanchéité (72c) du joint d'étanchéité (72) s'applique avec précontrainte sur l'arbre (76) à supporter.

3. Palier (56a, 56b) selon la revendication 1 ou 2, **caractérisé en ce que** la bague d'étanchéité (72) fait saillie radialement vers l'intérieur au-delà de l'épaulement de retenue (74).

4. Palier (56a, 56b) selon l'une quelconque des revendications précédentes, **caractérisé en ce que** la bague d'étanchéité (72) se compose d'un matériau auto-lubrifiant.

5. Palier (56a, 56b) selon l'une quelconque des revendications précédentes, **caractérisé en ce que** la bague d'étanchéité (72) présente une rainure (72d) sur son côté intérieur, sur le côté opposé aux lèvres d'étanchéité (72b, 72c).

6. Palier (56a, 56b) selon l'une quelconque des revendications précédentes, **caractérisé en ce qu'**entre la bague d'étanchéité (72) et la douille-palier (58) est en outre disposée une bague d'étanchéité pour arbre (68).

7. Palier (56a, 56b) selon la revendication 1, **caractérisé en ce que** la soupape de surpression (42) s'ouvre à une pression limite, la pression limite de la soupape de surpression (42) étant supérieure à la pression de refoulement d'un milieu entourant le palier.

8. Palier (56a, 56b) selon la revendication 1 ou 7, **caractérisé en ce que** des canaux de lubrifiant (82) sont disposés dans la douille-palier (58) avec une rainure de lubrifiant extérieure (78) et une rainure de lubrifiant intérieure (80).

9. Palier (56a, 56b) selon la revendication 8, **caractérisé par** une spirale de lubrifiant (66) disposée au niveau de la surface intérieure de la douille-palier (58).

10. Dispositif de refoulement pour matières épaisses (10), **caractérisé par** un palier (56a ; 56b) pour le support sur palier de l'arbre (76) selon l'une quelconque des revendications précédentes.

11. Dispositif de refoulement pour matières épaisses (10) selon la revendication 10, **caractérisé en ce que** des hélices en spirale (12) sont disposées sur l'arbre et dans lequel le palier (56a, 56b) est disposé sur une extrémité du côté de la sortie de l' arbre (76).
